# EUROPEAN PATENT SPECIFICATION

(11) **EP 3 353 120 B1**
(45) Date of publication and mention of the grant of the patent: **18.03.2020**
(21) Application number: 16849128.0
(22) Date of filing: 08.04.2016
(51) Int. Cl.: C02F 9/02, C02F 9/08, C10B 39/04, C10B 55/00, C10G 9/00

(54) **DELAYED COKE DRUM QUENCH SYSTEMS AND METHODS HAVING REDUCED ATMOSPHERIC EMISSIONS**
VERZÖGERTE KOKSTROMMELQUENCHSYSTEME UND VERFAHREN MIT REDUZIERTEN ATMOSPHÄRISCHEN EMISSIONEN
SYSTÈMES ET PROCÉDÉS DE TREMPE RETARDÉS POUR TAMBOUR DE COKÉFACTION AYANT DES ÉMISSIONS ATMOSPHÉRIQUES RÉDUITES

(30) Priority: 21.09.2015 US 201562221501 P
(43) Date of publication of application: 01.08.2018
(73) Proprietor: Bechtel Hydrocarbon Technology Solutions, Inc., Houston, TX 77056-6503 (US)
(72) Inventor: WARD, John, D., Katy, TX 77450 (US); HENFORD, Richard, Katy, TX 77494 (US); ALEXANDER, Scott, Billings, MT 95106 (US)
(74) Representative: Docherty, Andrew John
(86) International application number: PCT/US2016/026699
(87) International publication number: WO 2017/052692

(56) References cited:
- WO-A1-2014/153059
- US-A- 5 110 448
- US-A- 5 415 673
- US-A1- 2011 209 406
- US-A1- 2012 193 093
- US-A1- 2014 262 724
- US-A1- 2014 311 885

## Description

### FIELD OF THE DISCLOSURE

The present disclosure generally relates to delayed coking drum quench systems and methods having reduced atmospheric emissions. More particularly, the present disclosure relates to reducing atmospheric emissions of hydrocarbon vapors by flashing off hydrocarbon vapors in an overflow drum wherein the pressure is reduced by an overhead ejector to 0 Pag (0 psig), and where any remaining hydrocarbon vapors are flashed off through the overflow ejector to the blowdown condenser.

### BACKGROUND

Coking is one of the older refining processes. The purpose of a delayed coking plant is to convert heavy residual oils (e.g. tar, asphalt, etc.) into lighter, more valuable motor fuel blending stocks. Refinery coking is controlled, severe, thermal cracking. It is a process in which the high molecular weight hydrocarbon residue (normally from the bottoms of the vacuum flasher in a refinery crude unit) are cracked or broken up into smaller and more valuable hydrocarbons.

Coking is accomplished by subjecting the feed charge to an extreme temperature of approximately 500°C (930°F) that initiates the cracking process. The light hydrocarbons formed as a result of the cracking process flash off and are separated in conventional fractionating equipment. The material that is left behind after cracking is coke, which is mostly carbon. In addition to coke, which is of value in the metal industry in the manufacture of electrodes, fuel coke, titanium dioxide, etc., the products of a delayed coking plant include gas (refinery fuel gas), liquefied petroleum gas, naphtha, light gas oil, and heavy gas oil.

Most of the world's coking capacity is generated by delayed coking processes. Delayed coking can be thought of as a continuous batch reaction. The process makes use of paired coke drums. One drum (the active drum) is used as a reaction vessel for the thermal cracking of residual oils. This active drum slowly fills with coke as the cracking process proceeds. While the active drum is being filled with coke, a second drum (the inactive drum) is in the process of having coke removed from it. The coke drums are sized so that by the time the active drum is filled with coke, the inactive drum is empty. The process flow is then switched to the empty drum, which becomes the active drum. The full drum becomes the inactive drum and is emptied or decoked. By switching the process flow back and forth between the two drums in this way, the coking operation can continue uninterrupted.

In operation, after being heated in a direct-fired furnace, the oil is charged to the bottom of the active coke drum. The cracked light hydrocarbons rise to the top of the drum where they are removed and charged to a fractionator for separation. The heavier hydrocarbons are left behind, and the retained heat causes them to crack to coke.

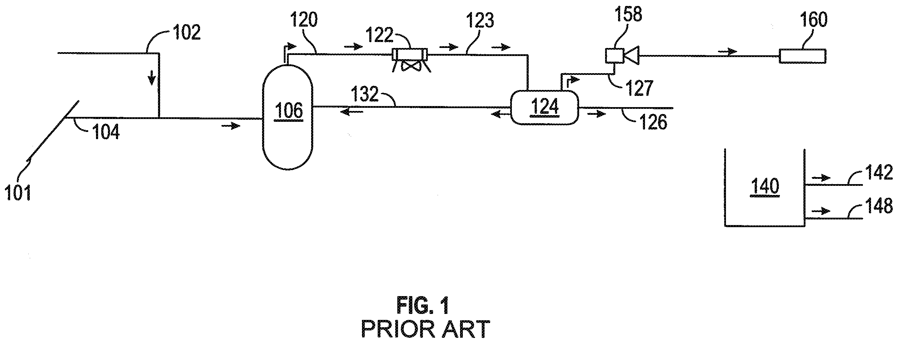

In **FIG. 1**, a schematic diagram illustrates one example of a delayed coking closed blowdown system (hereinafter "delayed coking quench system"), where the effluent from the inactive drum is processed. The quenching of the inactive coke drum produces large quantities of steam with some hydrocarbons which are processed in this system.

A quench tower **106,** a blowdown condenser **122** and a settling drum **124** form a closed blowdown system, which is used to recover effluent from the coke drum steaming, quenching and warming operations.

In conventional systems, a blowdown header line **104** communicates the hot vapor from a coke drum overhead line **101** to a quench tower **106** during the steaming and water quenching operation.

Just upstream of the quench tower **106,** the hot vapor is quenched by a controlled injection of water from the process. During the water quenching operation, the overhead stream from the quench tower **106,** is substantially steam with small amounts of hydrocarbons, and is sent in an overhead line **120** to the blowdown condenser **122.**

The blowdown condenser **122** condenses the bulk of the overhead stream to form a blowdown condenser outlet stream which is communicated in the blowdown condenser outlet stream line **123** to a blowdown settling drum **124.**

In the settling drum **124,** the blowdown condenser outlet stream is separated into a sour water stream **126,** a light slop oil stream **132** and a hydrocarbon vapor stream **127.** The hydrocarbon vapor stream **127** is sent to the blowdown ejector **158** and then to the fractionator overhead system **160.** The light slop oil stream **132** is returned to the quench tower **106.** The blowdown ejector **158** is used to reduce the pressure in the closed blowdown system and coke drum at the end of the water quench prior to isolating a coke drum and venting the coke drum to atmosphere. Alternatively, a compressor may be used in place of a blowdown ejector **158.** The blowdown ejector, which may be steam-driven, is used to target 14 kPag (2 psig) before venting the drum to atmosphere. Effluent from blowdown ejector **158** is sent to the fractionator overhead system **160,** and recovered to the main process.

A quench water tank **140** is used to provide water to quench water line **148** and to the coke cutting line **142.**

During the quench operation the inactive coke drum is connected to the closed blowdown system and the pressure in the inactive coke drum is essentially the same as the pressure in the closed blowdown system. At the end of the quench operation, the inactive coke drum is isolated from the closed blowdown system and is vented to the atmosphere. An ejector or small compressor may be used in a line containing the hydrocarbon vapor stream **127** to reduce the pressure in the closed blowdown system and inactive coke drum to about 14 kPag (2 psig) or less prior to isolating and venting the inactive coke drum as required by current environmental regulation guidelines. Despite venting the inactive coke drum to the atmosphere at 14 kPag (2 psig), a plume of steam is produced that may contain hydrocarbon vapors (e.g. methane, ethane, hydrogen sulfide) and coke fines (hereinafter collectively "atmospheric emissions"). Maintaining a pressure of 14 kPag (2 psig) in the inactive coke drum prior to venting to the atmosphere is also an issue because the coke drum pressure can spike due to continuing heat evolution from the coke bed after isolation from the closed blowdown system. On some older units, which start to vent at around 103 kPag (15 psig), noise is also a significant issue.

It is known that a delayed coking quench system may be modified to include a coke drum quench overflow system to provide the benefit of overflowing a coke drum at the end of the quench operation. Existing overflow systems are varied and some have been known to generate undesirable odors, and gas releases or fires, plugging exchangers and residual coke fines in lines that are flushed into other equipment when the coke drums are returned to the fill cycle because the overflow stream can contain significant atmospheric emissions. In addition, many existing overflow systems do not minimize atmospheric emissions, and merely relocate the source of the atmospheric emissions. WO 2014/153059 describes a delayed coking drum quench overflow system.

Because some existing overflow systems have American Petroleum Institute ("API") separators or other equipment open to the atmosphere, there can be atmospheric emissions, which is a serious problem. When the overflow stream is sent through an air cooler without being properly filtered, the air cooler can plug, which is also a problem in some existing overflow systems. In parts of the piping system used by existing overflow systems, coke fines are often left after the overflow operation, which are then flushed into the quench tower or fractionator when returning to the normal valving arrangement. A delayed coking unit that produces shot coke can result in larger amounts of oil and coke fines in the quench overflow stream, which is more problematic to handle.

### SUMMARY

The present disclosure therefore, meets the above needs and overcomes one or more deficiencies in the prior art by providing systems and methods for reducing atmospheric emissions of hydrocarbon vapors by flashing off hydrocarbon vapors in an overflow drum where the pressure is ultimately reduced to 0 Pag (0 psig) and then flashing off any remaining hydrocarbon vapors in an overflow tank wherein the pressure in the overflow tank is reduced to 0 Pag (0 psig) by an overflow ejector. In a first aspect there is provided a system according to the appended claims for reducing atmospheric emissions of hydrocarbon vapors in a delayed coke drum quench overflow system. In a second aspect there is provided a method according to the appended claims for reducing atmospheric emissions of hydrocarbon vapors in a delayed coke drum quench overflow system.

The present disclosure includes a system for reducing atmospheric emissions of hydrocarbon vapors in a delayed coke drum quench overflow system, which comprises: i) an overflow drum connected to a blowdown header line for reducing hydrocarbon vapors and producing a vapor overflow remainder and a liquid overflow remainder; ii) an overflow tank connected to the overflow drum by a liquid overflow remainder line for separating at least one of skim oil, water, coke fines, and tank vapor from the liquid overflow remainder; iii) an overflow drum vapor line in fluid communication with the overflow drum for transmitting the vapor overflow remainder to a steam/hydrocarbon vapor line; and iv) a tank vapor line in fluid communication with the overflow tank for transmitting the tank vapor to an overflow ejector, wherein the overflow ejector includes an inlet in fluid communication with the tank vapor line and an outlet in fluid communication with the steam line for reducing the pressure in the overflow tank to 0 Pag (0 psig).

The present disclosure includes a method for reducing atmospheric emissions of hydrocarbon vapors in a delayed coke drum quench overflow system, which comprises: i) receiving overflow from a coke drum in an overflow drum; ii) producing a vapor overflow remainder and a liquid overflow remainder from an overflow drum; iii) separating at least one of skim oil, water, coke fines, and tank vapor from the liquid overflow remainder in an overflow tank; iv) transmitting the vapor overflow remainder to a steam/hydrocarbon vapor line; v) transmitting the tank vapor to an inlet of an overflow ejector for reducing the pressure of the overflow tank to 0 Pag (0 psig).

Additional aspects, advantages and embodiments of the disclosure will become apparent to those skilled in the art from the following description of the various embodiments and related drawings.

### BRIEF DESCRIPTION OF THE DRAWINGS

The present disclosure is described below with references to the accompanying drawings, in which like elements are referenced with like numerals, wherein:
**FIG. 1** is a schematic diagram illustrating one example of a conventional delayed coking quench system.
**FIG. 2** is a schematic diagram illustrating a conventional delayed coking quench system and one embodiment of a delayed coking quench overflow system according to the present disclosure.
**FIG. 3** is a schematic diagram illustrating a conventional delayed coking quench system and another embodiment of a delayed coking quench overflow system according to the present disclosure.

### DETAILED DESCRIPTION

The subject matter of the present disclosures is described with specificity, however, the description itself is not intended to limit the scope of the disclosure. The subject matter thus, might also be embodied in other ways, to include different structures, steps and/or combinations similar to and/or fewer than those described herein, in conjunction with other present or future technologies. Moreover, although the term "step" may be used herein to describe different elements of methods employed, the term should not be interpreted as implying any particular order among or between various steps herein disclosed unless otherwise expressly limited by the description to a particular order. While the following description refers to delayed coking drum quench operations, the systems and methods of the present disclosure are not limited thereto and may be applied in other operations to achieve similar results.

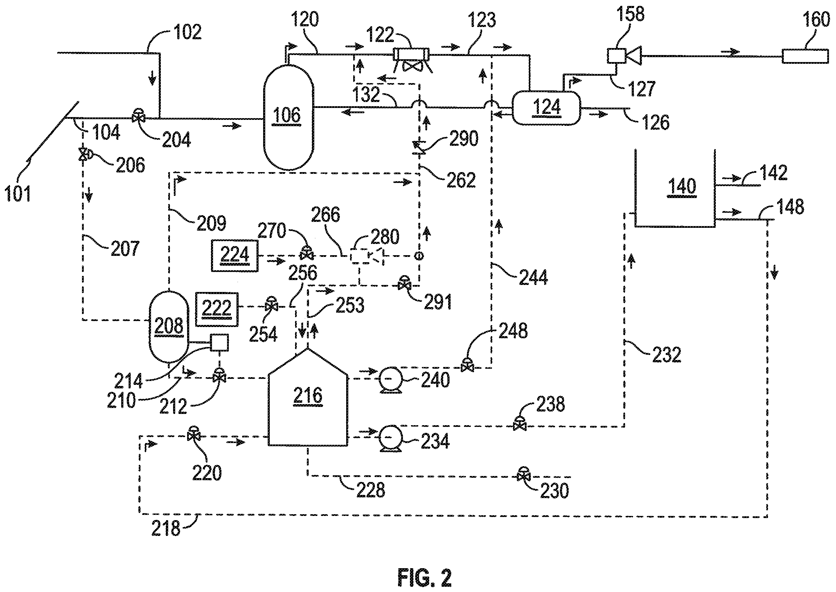

Referring now to **FIG. 2****,** a schematic diagram illustrates a conventional delayed coking quench system and one embodiment of a delayed coking quench overflow system according to the present disclosure.

In operation, at the end of the water quench operation, water covers the coke bed in the coke drum and is allowed to overflow into an overflow drum **208** and overflow tank **216.** This is accomplished when a level switch on the coke drum causes a valve **204** in the blowdown header line **104** to close and opens a supply line valve **206** in the supply line **207** to the overflow drum **208.** To ensure the coke drum relief valve discharge remains operable, valve **204** is positioned upstream of the coke drum relief valve discharge **102** to the quench tower **106.**

In the overflow drum **208,** hydrocarbon vapors are preferably flashed off, reducing or eliminating atmospheric emissions. The overflow drum **208** is in communication with a steam/hydrocarbon vapor line **262** via an overflow drum vapor line **209,** to communicate the flashed-off hydrocarbons and steam, the vapor overflow remainder, to the overhead hydrocarbon steam stream line **120** for delivery to the blowdown condenser **122** and, ultimately, the blowdown ejector **158.** The overflow drum vapor line **209** is thus in fluid communication with the overflow drum **208** for transmitting the vapor overflow remainder to a steam line **262.** The communication with the steam/hydrocarbon vapor line **262,** which operates at 0-14 kPag (0-2 psig), ensures the overflow drum **208** likewise operates at approximately 0-14 kPag (0-2 psig), and therefore maximizes the volume of vapor overflow remainder flashed off through the blowdown condenser **122.** The overflow drum **208** is thus connected to a blowdown header line **104** for reducing hydrocarbon vapors and producing a vapor overflow remainder and a liquid overflow remainder.

A liquid overflow remainder line **210** in communication with the bottom of the overflow drum delivers the bulk of the overflow stream, the liquid overflow remainder, containing water, liquid hydrocarbons, and coke fines, to an overflow tank **216.** A liquid overflow remainder valve **212** in the liquid overflow remainder line **210** controls the flow through the liquid overflow remainder line **210** by the action of a level controller **214,** which maintains a constant level in the overflow drum **208.**

The overflow tank **216** has sufficient residence time to allow separation of oil, water and coke fines. The oil is skimmed off and sent to the settling drum **124.** The water is sent to the quench water tank **140.** The coke fines are drained to the coke pit. In the overflow tank **216,** the overflow drum bottom stream is collected and temporarily retained, permitting separation of the overflow water and the liquid hydrocarbons. The coke fines separate within the water phase. A coke fines line **228** permits water laden with concentrated coke fines to exit the overflow tank **216** and permits delivery to the coke pit. A coke fines valve **230** is provided in the coke fines line **228** to permit draining of the water laden with concentrated coke fines. In operation, coke fines valve **230** is opened periodically, such as once-per-shift.

In the overflow tank **216,** the overflow water is removed from the overflow tank **216** by an overflow water line **232** and provided to the quench water tank **140.** Preferably, the overflow water line **232** is positioned appropriately on the side of the overflow tank **216** to draw only overflow water, rather than the liquid hydrocarbons or the coke fines. An overflow water pump **234** may be positioned in the overflow water line **232** to aid in removal of the overflow water from the overflow tank **216** and transmission to the quench water tank **140.** An overflow water valve **238** may also be positioned within the overflow water line **232** to terminate flow through the overflow water line **232** when desired. The overflow water valve **238** may be controlled by a flow controller with a level override associated with the overflow tank to avoid a low level in the tank and cavitation of the pump. Overflow water, free of hydrocarbons, is therefore transmitted from the overflow tank **216** to the quench water tank **140** for use in the quench process and to make volume available in the overflow tank **216** for the next overflow operation. The overflow tank 216 is therefore connected to the overflow drum 208 by a liquid overflow remainder line 210 for separating at least one of skim oil, water, coke fines, and tank vapor from the liquid overflow remainder.

As needed, a water-inflow line **218,** drawing quench water from the quench water tank **140,** may be provided to introduce quench water to the overflow tank **216** to adjust volume in the overflow tank **216** as needed. A water-inflow valve **220** may be provided in the water-inflow line **218** to control the flow through the water-inflow line **218.** The water-inflow valve **220** may be controlled manually, or by a flow controller, as well as other control systems known in the art.

In the overflow tank **216,** the liquid hydrocarbons, found as skim oil, are removed from the overflow tank **216** by a skim oil line **244** and provided to the settling drum **124.** A drawoff tray is located high in the overflow tank **216.** As the skim oil is separated from the overflow water, the skim oil collects in the drawoff tray. When the level in the drawoff tray is sufficient, the skim oil is transmitted via the skim oil line **244** and the outlet stream line **123** to the settling drum **124.** The determination of sufficiency may be accomplished by a level controller, or by other control systems known in the art. A skim oil pump **240** may be positioned in the skim oil line **244** to aid in removal of the skim oil from the overflow tank **216** and transmission to the settling drum **124.** A skim oil flow control valve **248** may also be positioned within the skim oil line **244** to terminate flow through the skim oil line **244** if the level in the overflow tank draw tray is low.

To ensure a vacuum does not arise in the overflow tank **216,** a non-air gas, preferably a fuel gas, natural gas, or nitrogen gas, is introduced to the overflow tank **216** by a non-air gas line **256.** The non-air gas avoids the potential for air ingress into the system, which prevents the potential for hazardous air-hydrocarbon mixtures, and serves as a vacuum-breaker gas. A non-air gas valve **254,** preferably controlled by a pressure controller and set to open on very low pressure, may be provided in the non-air gas line **256** to preclude a vacuum from arising. A non-air gas supply may be provided in communication with the overflow tank 216 together with a non-air gas valve intermediate the non-air gas supply and the overflow tank 216.

Any steam/hydrocarbon vapor, and non-air gas, the tank vapor, exits the overflow tank **216** by a tank vapor line **253** and is communicated to the steam/hydrocarbon vapor line **262** through an overflow ejector **280.**

The communication with the overflow ejector **280,** ensures overflow tank **216** operates at 0 psig, and therefore reduces the vapor pressure of the liquids in the overflow tank **216,** so that when exposed to atmosphere, essentially no vapor is generated.

The overflow ejector **280** is in communication with the steam/hydrocarbon vapor line **262** and the tank vapor line **253,** having an inlet in communication with the tank vapor line **253** and an outlet in communication with the steam/hydrocarbon vapor line **262.** The overflow ejector **280** reduces the pressure in the overflow tank **216** to 0 Pag (0 psig). The outflow from overflow ejector **280,** together with the remaining vapor in the overflow drum vapor line **209** are provided to the blowdown condenser **122** with the content of the overhead hydrocarbon steam stream line **120** to condense the steam and hydrocarbon vapor. Steam, the motive fluid for the overflow ejector **280** is provided from an overflow ejector steam line **266.** An overflow ejector steam line valve **270** may be provided in the overflow ejector steam line **266** to open and allow the flow of steam to the overflow ejector **280.** The overflow ejector steam line valve **270** is an on/off valve which can be opened and closed from the control room, but may be controlled by other control systems known in the art. The overflow ejector **280** may include a suction pressure controller **291** in communication with the overflow ejector discharge to control pressure in the overflow tank. The setting on this controller can be 0 Pag (0 psig). The suction pressure controller **291** is in communication with the inlet of the overflow ejector **280** and the outlet of the overflow ejector **280,** for preventing a vacuum in the tank vapor line **253** and therefore in the overflow tank **216.**

An overflow ejector steam line check valve **290** may be positioned in the overflow ejector steam line **266** intermediate the communication from the overflow ejector **280** and the junction with the overhead hydrocarbon steam stream line **120** to prevent backflow from the quench tower **106** to the overflow tank **216** and overflow drum **208.**

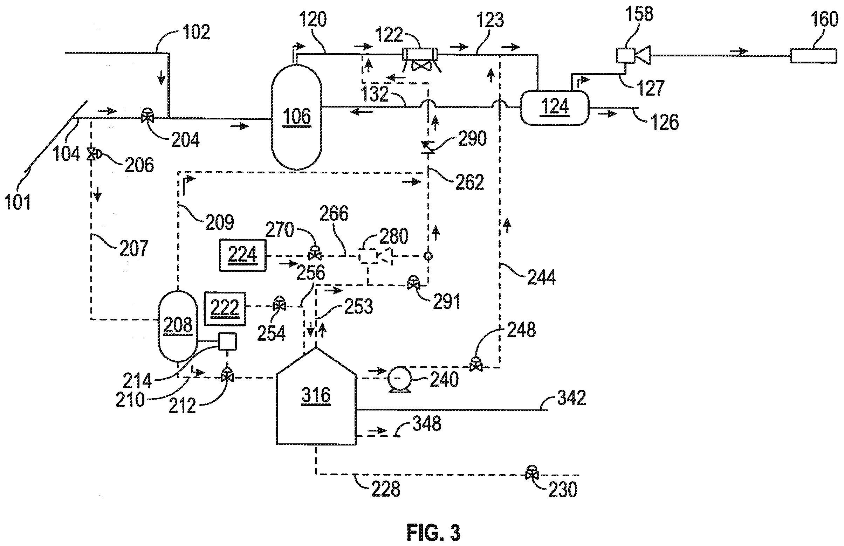

Referring now to **FIG. 3****,** a schematic diagram illustrates a conventional delayed coking quench system and another embodiment of a delayed coking quench overflow system according to the present disclosure.

In another embodiment, the function of the quench water tank **140** is accomplished in a quench water/overflow tank **316,** a modification of the overflow tank **216.** The quench water/overflow tank **316** includes all elements associated with the overflow tank **216** together than the coke cutting line **342** and a quench water line **348** associated with the quench water tank **140.** The overflow water pump **234** and the overflow water line **232,** and the water-inflow line **218** and the water-inflow valve **220** shown in **FIG. 2** are eliminated.

The delayed coking quench overflow systems illustrated in **FIGS. 2-3** effectively minimize atmospheric emissions, which can be applied to delayed coking units that produce shot coke as well as sponge coke. The delayed coking quench overflow systems reduce atmospheric emission of hydrocarbon vapors by flashing off steam and hydrocarbon vapors in an overflow drum - wherein the pressure is reduced by a blowdown ejector to essentially 0-14 kPag (0-2 psig) - and similarly where any remaining hydrocarbon vapors are flashed off from an overflow tank - wherein pressure is reduced to essentially 0 Pag (0 psig) from the overflow ejector - to the blowdown condenser.

The present disclosure thus provides a method for reducing the atmospheric emissions of hydrocarbon vapors in a delayed coke drum quench overflow system by receiving overflow from a coke drum in an overflow drum (208), producing a vapor overflow remainder and a liquid overflow remainder from the overflow drum **208,** separating at least one of skim oil, water, coke fines, and tank vapor from the liquid overflow remainder in the overflow tank **216,** transmitting the vapor overflow remainder to the steam/ hydrocarbon vapor line 262 and transmitting the tank vapor to the steam/hydrocabon vapor line 262 through the overflow ejector 280 for reducing the pressure of the overflow tank **216** to 0 Pag (0 psig). The method may further include introducing water into the overflow drum **208** to maintain a constant level of water in the overflow drum **208** or introducing a non-air gas into the overflow tank **216** to prevent a vacuum in the overflow tank **216.** The method may also include positioning a check valve **290** in the steam/ hydrocarbon vapor line **262** to prevent flow from a quench tower **106** to the overflow tank **216** or the overflow drum **208.**

Thus, according to the present disclosure, emissions are minimized by recovering all hydrocarbon/steam vapor and oil to the existing blowdown system - a closed system. The overflow ejector **280** reduces the pressure in the overflow tank **216,** and the associated tank vapor line **253** to 0 Pag (0 psig). The associated water streams - the coke fines line **228,** and the overflow water line **232-** are therefore also at 0 Pag (0 psig), eliminating potential vapor when these streams are exposed to atmosphere. Operation of the overflow tank **216,** is at the same pressure as the quench water tank **140,** which may allow the use of one tank to perform the functions of both an overflow tank and a quench water tank. In addition, the delayed coking quench overflow systems illustrated in **FIGS. 2-3** may be retrofitted to conventional delayed coking quench systems.

While the present disclosure has been described in connection with presently preferred embodiments, it will be understood by those skilled in the art that it is not intended to limit the disclosure to those embodiments. For example, it is anticipated that by routing certain streams differently or by adjusting operating parameters, different optimizations and efficiencies may be obtained, which would nevertheless not cause the system to fall outside of the scope of the present disclosure.

## Claims

1. A system for reducing atmospheric emissions of hydrocarbon vapors in a delayed coke drum quench overflow system, which comprises:
an overflow drum (208) for receiving overflow from a coke drum, the overflow drum connected to a blowdown header line (104) for reducing hydrocarbon vapors and producing a vapor overflow remainder and a liquid overflow remainder;
an overflow tank (216) connected to the overflow drum (208) by a liquid overflow remainder line (210) for separating at least one of skim oil, water, coke fines, and tank vapor from the liquid overflow remainder;
an overflow drum vapor line (209) in fluid communication with the overflow drum (208) for transmitting the vapor overflow remainder to a steam/hydrocarbon vapor line (262); and
a tank vapor line (253) in fluid communication with the overflow tank (216) for transmitting the tank vapor to an overflow ejector (280), wherein the overflow ejector (280) includes an inlet in fluid communication with the tank vapor line (253) and an outlet in fluid communication with the steam/hydrocarbon vapor line (262) for reducing the pressure in the overflow tank (216) to 0 Pag (0 psig).

2. The system of claim 1, further comprising a suction pressure controller (291), the suction pressure controller (291) in communication with the inlet of the overflow ejector (280) and the outlet of the overflow ejector (280), for preventing a vacuum in the tank vapor line (253).

3. The system of claim 2, further comprising:
a liquid overflow remainder valve (212) in the liquid overflow remainder line (210) and a limit controller (214) associated with the overflow drum (208) and adapted to control the liquid overflow remainder valve (212) for maintaining a constant level in the overflow drum (208).

4. The system of claim 3, further comprising:
a non-air gas supply in communication with the overflow tank (216); and
a non-air gas valve (254) intermediate the non-air gas supply and the overflow tank (216) for preventing a vacuum in the overflow tank (216).

5. The system of claim 4, further comprising:
a check valve (290), the check valve (290) in the steam/hydrocarbon vapor line (262) intermediate an overhead line (120), the overhead line (120) intermediate a quench tower (106) and the blowdown condenser (122), and the overflow drum vapor line (209), to prevent flow from the quench tower (106) to the overflow tank (216) or the overflow drum (208).

6. The system of claim 5, further comprising:
a steam supply (266) in connection with the overflow tank (216); and
an overflow ejector valve (270) intermediate the steam supply (266) and the overflow ejector (280) to open the flow of steam to the overflow ejector (280).

7. The system of claim 1, further comprising:
an overflow line (232) in communication with the overflow tank (216) and a quench water tank (140) for communicating water from the overflow tank (216) to the quench water tank (140).

8. The system of claim 7, further comprising:
an overflow line valve (238) in the overflow line (232) for limiting a flow of water through the overflow line (232).

9. The system of claim 8, further comprising:
a coke cutting line (342) connected to the quench water tank (140);
a quench water line (348) connected to the quench water tank (140);
a water in-flow line (218) from the quench water line (348) to the overflow tank (216); and
a water inflow valve (220) in the water in-flow line (218) intermediate the quench water line (348) and the overflow tank (216) for adjusting a volume of water in the overflow tank (216).

10. The system of claim 1, further comprising:
a coke cutting line (342) connected to the overflow tank (216); and.
a quench water line (348) connected to the overflow tank (216).

11. A method for reducing atmospheric emissions of hydrocarbon vapors in a delayed coke drum quench overflow system, which comprises:
receiving overflow from a coke drum in an overflow drum (208);
producing a vapor overflow remainder and a liquid overflow remainder from the overflow drum (208);
separating of skim oil, water, coke fines, and tank vapor from the liquid overflow remainder in an overflow tank (216);
transmitting the vapor overflow remainder to a steam/hydrocarbon vapor line (262); and
transmitting the tank vapor to the steam/hydrocarbon vapor line (262) through an overflow ejector (280) for reducing the pressure of the overflow tank (216) to 0 Pag (0 psig).

12. The method of claim 11, further comprising:
introducing water into the overflow drum (208) to maintain a constant level of water in the overflow drum (208).

13. The method of claim 12, further comprising:
introducing a non-air gas into the overflow tank (216) to prevent a vacuum in the overflow tank (216).

14. The method of claim 13, further comprising:
positioning a check valve (290) in the steam/hydrocarbon vapor line (262) to prevent flow from a quench tower (106) to the overflow tank (216) or the overflow drum (208).

## Patentansprüche

1. System zum Reduzieren von atmosphärischen Emissionen von Kohlenwasserstoffdünsten in einem verzögerten Kokstrommelquench-Überlaufsystem, Folgendes beinhaltend:
eine Überlauftrommel (208) zum Aufnehmen eines Überlaufs von einer Kokstrommel, wobei die Überlauftrommel mit einer Blow-Down-Sammlerleitung (104) zum Reduzieren von Kohlenwasserstoffdünsten und Erzeugen eines Dunstüberlaufrückstandes und eines Flüssigkeitsüberlaufrückstandes verbunden ist;
einen Überlauftank (216), welcher mit der Überlauftrommel (208) durch eine Flüssigkeitsüberlaufrückstandsleitung (210) zum Abscheiden von mindestens einem von Skim-Öl, Wasser, Koksfeinstaub und Tankdunst von dem Flüssigkeitsüberlaufrückstand verbunden ist;
eine Überlauftrommeldunstleitung (209) in Fluidkommunikation mit der Überlauftrommel (208) zum Übertragen des Dunstüberlaufrückstandes an eine Dampf-/Kohlenwasserstoffdunstleitung (262); und
eine Tankdunstleitung (253) in Fluidkommunikation mit dem Überlauftank (216) zum Übertragen des Tankdunstes an einen Überlaufauswerfer (280), wobei der Überlaufauswerfer (280) einen Einlass in Fluidkommunikation mit der Tankdunstleitung (253) und einen Auslass in Fluidkommunikation mit der Dampf-/Kohlenwasserstoffdunstleitung (262) zum Reduzieren des Drucks in dem Überlauftank (216) auf 0 Pag (0 Psig) umfasst.

2. System nach Anspruch 1, zudem beinhaltend ein Saugdruck-Steuergerät (291), wobei das Saugdruck-Steuergerät (291) in Kommunikation mit dem Einlass des Überlaufauswerfers (280) und dem Auslass des Überlaufauswerfers (280) zum Verhindern eines Vakuums in der Tankdunstleitung (253) steht.

3. System nach Anspruch 2, zudem Folgendes beinhaltend:
ein Flüssigkeitsüberlaufrückstandsventil (212) in der Flüssigkeitsüberlaufrückstandsleitung (210) und einen der Überlauftrommel (208) zugeordneten Begrenzer (214), welcher geeignet ist, das Flüssigkeitsüberlaufrückstandsventil (212) zum Halten eines konstanten Pegels in der Überlauftrommel (208) zu steuern.

4. System nach Anspruch 3, zudem Folgendes beinhaltend:
eine Nichtluft-Gaszufuhr in Kommunikation mit dem Überlauftank (216); und
ein Nichtluft-Gasventil (254) zwischen der Nichtluft-Gaszufuhr und dem Überlauftank (216) zum Verhindern eines Vakuums in dem Überlauftank (216).

5. System nach Anspruch 4, zudem Folgendes beinhaltend:
ein Absperrventil (290), wobei das Absperrventil (290) in der Dampf-/Kohlenwasserstoffdunstleitung (262) zwischen einer Oberstromleitung (120), wobei die Oberstromleitung (120) zwischen einem Quenchturm (106) und dem Blow-Down-Kondensator (122) liegt, und der Überlauftrommeldunstleitung (209) liegt, um Strömung von dem Quenchturm (106) zum Überlauftank (216) oder zu der Überlauftrommel (208) zu verhindern.

6. System nach Anspruch 5, zudem Folgendes beinhaltend:
eine Dampfzufuhr (266) in Verbindung mit dem Überlauftank (216); und
ein Überlaufauswerferventil (270) zwischen der Dampfzufuhr (266) und dem Überlaufauswerfer (280) zum Öffnen der Strömung von Dampf an den Überlaufauswerfer (280).

7. System nach Anspruch 1, zudem Folgendes beinhaltend:
eine Überlaufleitung (232) in Verbindung mit dem Überlauftank (216) und einem Quenchwassertank (140) zum Kommunizieren von Wasser vom Überlauftank (216) an den Quenchwassertank (140).

8. System nach Anspruch 7, zudem Folgendes beinhaltend:
ein Überlaufleitungsventil (238) in der Überlaufleitung (232) zum Begrenzen einer Strömung von Wasser durch die Überlaufleitung (232).

9. System nach Anspruch 8, zudem Folgendes beinhaltend:
eine Koksschneideleitung (342), verbunden mit dem Quenchwassertank (140);
eine Quenchwasserleitung (348), verbunden mit dem Quenchwassertank (140);
eine Wassereinströmleitung (218) von der Quenchwasserleitung (348) zum Überlauftank (216); und
ein Wassereinströmventil (220) in der Wassereinströmleitung (218) zwischen der Quenchwasserleitung (348) und dem Überlauftank (216) zum Anpassen eines Wasservolumens in dem Überlauftank (216).

10. System nach Anspruch 1, zudem Folgendes beinhaltend:
eine Koksschneideleitung (342), verbunden mit dem Überlauftank (216); und
eine Quenchwasserleitung (348), verbunden mit dem Überlauftank (216).

11. Verfahren zum Reduzieren von atmosphärischen Emissionen von Kohlenwasserstoffdünsten in einem verzögerten Kokstrommelquench-Überlaufsystem, Folgendes beinhaltend:
Aufnehmen von Überlauf aus einer Kokstrommel in einer Überlauftrommel (208);
Erzeugen eines Dunstüberlaufrückstandes und eines Flüssigkeitsüberlaufrückstandes aus der Überlauftrommel (208);
Abscheiden von Skim-Öl, Wasser, Koksfeinstaub und Tankdunst von dem Flüssigkeitsüberlaufrückstand in einem Überlauftank (216);
Übertragen des Dunstüberlaufrückstands an eine Dampf-/Kohlenwasserstoffdunstleitung (262); und
Übertragen des Tankdunstes an die Dampf-/Kohlenwasserstoffdunstleitung (262) durch einen Überlaufauswerfer (280) zum Reduzieren des Drucks des Überlauftanks (216) auf 0 Pag (0 Psig).

12. Verfahren nach Anspruch 11, zudem beinhaltend:
Einleiten von Wasser in die Überlauftrommel (208) zum Halten eines konstanten Wasserspiegels in der Überlauftrommel (208).

13. Verfahren nach Anspruch 12, zudem beinhaltend:
Einleiten eines Nichtluft-Gases in den Überlauftank (216) zum Verhindern eines Vakuums in dem Überlauftank (216).

14. Verfahren nach Anspruch 13, zudem beinhaltend:
Positionieren eines Absperrventils (290) in der Dampf-/Kohlenwasserstoffdunstleitung (262) zum Verhindern einer Strömung von einem Quenchturm (106) zum Überlauftank (216) oder zu der Überlauftrommel (208).

## Revendications

1. Système de réduction des émissions atmosphériques de vapeurs hydrocarbures dans un système de trop-plein de trempe retardée à tambour de cokéfaction, qui comprend :
un tambour de trop-plein (208) permettant de recevoir un trop-plein d'un tambour de cokéfaction, le tambour de trop-plein étant relié à une ligne de collecteur de purge (104) permettant de réduire des vapeurs hydrocarbures et de produire un reste de trop-plein de vapeur et un reste de trop-plein de liquide ;
un réservoir de trop-plein (216) relié au tambour de trop-plein (208) par une ligne de reste de trop-plein de liquide (210) permettant de séparer au moins un élément parmi une huile dégraissée, de l'eau, des fines de coke, et de la vapeur du réservoir provenant du reste de trop-plein de liquide ;
une ligne de vapeur de tambour de trop-plein (209) en communication fluidique avec le tambour de trop-plein (208) permettant de transmettre le reste de trop-plein de vapeur vers une ligne de vapeur/vapeur hydrocarbure (262) ; et
une ligne de vapeur de réservoir (253) en communication fluidique avec le réservoir de trop-plein (216) permettant de transmettre la vapeur du réservoir à un éjecteur de trop-plein (280), dans lequel l'éjecteur de trop-plein (280) inclut une entrée en communication fluidique avec la ligne de vapeur de réservoir (253) et une sortie en communication fluidique avec la ligne de vapeur/vapeur hydrocarbure (262) permettant de réduire la pression dans le réservoir de trop-plein (216) à 0 Pag (0 psig).

2. Système selon la revendication 1, comprenant en outre un contrôleur de pression d'aspiration (291), le contrôleur de pression d'aspiration (291) étant en communication avec l'entrée de l'éjecteur de trop-plein (280) et la sortie de l'éjecteur de trop-plein (280), afin d'empêcher un vide dans la ligne de vapeur du réservoir (253).

3. Système selon la revendication 2, comprenant en outre :
une soupape de reste de trop-plein liquide (212) dans la ligne de reste de trop-plein liquide (210) et un contrôleur de limite (214) associé au tambour de trop-plein (208) et conçue afin de commander la soupape de reste de trop-plein liquide (212) permettant de maintenir un niveau constant dans le tambour de trop-plein (208).

4. Système selon la revendication 3, comprenant en outre :
une alimentation de gaz différent de l'air en communication avec le réservoir de trop-plein (216) ; et
une vanne de gaz différente de l'air (254) intermédiaire par rapport à l'alimentation de gaz différente de l'air et au réservoir de trop-plein (216) permettant de prévenir un vide dans le réservoir de trop-plein (216).

5. Système selon la revendication 4, comprenant en outre :
un clapet anti-retour (290), le clapet anti-retour (290) dans la ligne de vapeur/vapeur hydrocarbure (262) intermédiaire par rapport à une ligne aérienne (120), la ligne aérienne (120) étant intermédiaire par rapport à une tour de trempe (106) et au condenseur de purge (122), et à la ligne de vapeur de tambour de trop-plein (209), permettant de prévenir l'écoulement depuis la tour de trempe (106) vers le réservoir de trop-plein (216) ou le tambour de trop-plein (208).

6. Système selon la revendication 5, comprenant en outre :
une alimentation en vapeur (266) reliée au réservoir de trop-plein (216) ; et
une soupape d'éjecteur de trop-plein (270) intermédiaire par rapport à l'alimentation en vapeur (266) et à l'éjecteur de trop-plein (280) permettant d'ouvrir l'écoulement de vapeur vers l'éjecteur de trop-plein (280).

7. Système selon la revendication 1, comprenant en outre :
une ligne de trop-plein (232) en communication avec le réservoir de trop-plein (216) et un réservoir d'eau de trempe (140) permettant de faire communiquer l'eau depuis le réservoir de trop-plein (216) vers un réservoir d'eau de trempe (140).

8. Système selon la revendication 7, comprenant en outre :
une soupape de ligne de trop-plein (238) dans la ligne de trop-plein (232) permettant de limiter un écoulement d'eau à travers la ligne de trop-plein (232).

9. Système selon la revendication 8, comprenant en outre :
une ligne d'alimentation des cokeurs (342) raccordée au réservoir d'eau de trempe (140) ;
une ligne d'eau de trempe (348) raccordée au réservoir d'eau de trempe (140) ;
une ligne d'écoulement d'eau en entrée (218) depuis la ligne d'eau de trempe (348) jusqu'au réservoir de trop-plein (216), et
une vanne d'entrée d'eau (220) dans la ligne d'écoulement d'eau en entrée (218) intermédiaire par rapport à la ligne d'eau de trempe (348) et au réservoir de trop-plein (216) permettant d'ajuster un volume d'eau dans le réservoir de trop-plein (216).

10. Système selon la revendication 1, comprenant en outre :
une ligne d'alimentation des cokeurs (342) raccordée au réservoir de trop-plein (216) ; et
une ligne d'eau de trempe (348) raccordée au réservoir de trop-plein (216).

11. Procédé de réduction des émissions atmosphériques de vapeurs hydrocarbures dans un système de trop-plein de trempe retardée à tambour de cokéfaction, qui comprend :
la réception d'un trop-plein d'un tambour de cokéfaction dans un tambour de trop-plein (208) ;
la production d'un reste de trop-plein de vapeur et d'un reste de trop-plein de liquide du tambour de trop-plein (208) ;
la séparation d'huile dégraissée, d'eau, de fines de coke et de vapeur du réservoir du reste de trop-plein de liquide dans un réservoir de trop-plein (216) ;
la transmission du reste de trop-plein de vapeur vers une ligne de vapeur/vapeur hydrocarbure (262) ; et
la transmission de la vapeur du réservoir à la ligne de vapeur/vapeur hydrocarbure (262) à travers un éjecteur de trop-plein (280) permettant de réduire la pression du réservoir de trop-plein (216) à 0 Pag (0 psig).

12. Procédé selon la revendication 11, comprenant en outre :
l'introduction d'eau dans le tambour de trop-plein (208) permettant de maintenir un niveau constant d'eau dans le tambour de trop-plein (208).

13. Procédé selon la revendication 12, comprenant en outre :
l'introduction d'un gaz différent de l'air dans le réservoir de trop-plein (216) afin d'empêcher un vide dans le réservoir de trop-plein (216).

14. Procédé selon la revendication 13, comprenant en outre :
le positionnement d'un clapet anti-retour (290) dans la ligne de vapeur/vapeur hydrocarbure (262) afin d'empêcher un écoulement depuis une tour de trempe (106) vers le réservoir de trop-plein (216) ou le tambour de trop-plein (208).
